# DEMANDE DE BREVET EUROPEEN

(11) **EP 1 193 145 A1**
(43) Date de publication de la demande: **03.04.2002**
(21) Numéro de dépôt: 01122855.8
(22) Date de dépôt: 24.09.2001
(51) Int. Cl.: B60R 25/04

(54) **Ensemble destiné à échanger des données dont certaines sont représentatives d'au moins un utilisateur autorisé du véhicule automobile**

(30) Priorité: 27.09.2000 FR 0012257
(71) Demandeur: Valeo Securité Habitacle, 94042 Créteil (FR)
(72) Inventeur: Batty, Raoul, 58000 Nevers (FR); Lesueur, Guillaume, 58000 Nevers (FR)
(74) Mandataire: Croonenbroek, Thomas

(57) **Abrégé**

Cet ensemble comprend un organe portatif (14), formant un support pour les données représentatives d'au moins un utilisateur autorisé, et une unité fixe (12) d'échange de données agencée dans le véhicule, destinée à assurer une fonction d'antivol par traitement de données. L'unité fixe (12) comprend un tunnel (24) de logement de l'organe portatif (14) muni d'une extrémité d'accès débouchant dans une face de l'unité fixe, dite face d'accès (F). L'unité fixe (12) comprend au moins un organe (60, 62) de diffusion de lumière associé à un organe de commande manuel (54) porté par la face d'accès de l'unité fixe, disposé au voisinage de cet organe de commande manuel (54) et susceptible d'adopter au moins deux états lumineux, cet organe de diffusion de lumière (60, 62) associé à l'organe de commande manuel (54) étant destiné à changer d'état au moins à la suite de l'actionnement de l'organe de commande manuel (54).

## Description

La présente invention concerne un ensemble perfectionné pour véhicule automobile destiné à échanger des données dont certaines sont représentatives d'au moins un utilisateur autorisé du véhicule.

On connaît déjà dans l'état de la technique, notamment d'après FR-A-2 779 563 (FR-98 07250) et FR-A-2 786 297 (FR-98 14571), un ensemble pour véhicule automobile destiné à échanger des données dont certaines sont représentatives d'au moins un utilisateur autorisé du véhicule, du type comprenant un organe portatif, formant un support pour les données représentatives d'au moins un utilisateur autorisé, et une unité fixe d'échange de données agencée dans le véhicule, destinée à assurer une fonction d'antivol par traitement de données, cette unité fixe comprenant un tunnel de logement de l'organe portatif muni d'une extrémité d'accès débouchant dans une face de l'unité fixe, dite face d'accès.

Habituellement, l'unité fixe comprend un contacteur électrique d'activation d'un état de marche du véhicule, dit contacteur de marche, l'organe portatif étant déplaçable longitudinalement dans le tunnel depuis l'extrémité d'accès de ce tunnel vers une position stable d'actionnement du contacteur de marche.

Un ensemble du type précité est avantageusement utilisé pour assurer une fonction antivol d'un véhicule automobile. A cet effet, l'unité fixe d'échange de données est agencée dans l'habitacle du véhicule et assure la fonction antivol en traitant des données notamment celles représentatives de l'utilisateur autorisé.

Lorsque l'unité fixe d'échange de données a reconnu l'utilisateur autorisé celui-ci fait démarrer le moteur du véhicule habituellement en actionnant un bouton de commande, séparé de l'unité fixe, agencé dans une planche de bord ou une console de l'habitacle. Pour arrêter le moteur du véhicule, l'utilisateur actionne également le bouton de commande.

L'invention a notamment pour but d'optimiser l'ergonomie et de simplifier la structure des moyens mis en oeuvre pour identifier l'utilisateur et effectuer le démarrage ou l'arrêt du moteur du véhicule.

A cet effet, l'invention a pour objet un ensemble pour véhicule automobile destiné à échanger des données dont certaines sont représentatives d'au moins un utilisateur autorisé du véhicule, du type précité, **caractérisé en ce que** l'unité fixe d'échange de données comprend un contacteur électrique d'activation d'un état de démarrage ou d'arrêt d'un moteur du véhicule, dit contacteur de démarrage, actionné par un organe de commande manuel porté par la face d'accès de l'unité fixe.

Suivant d'autres caractéristiques de cet ensemble :
- l'ensemble comprend au moins un organe de diffusion de lumière associé à l'organe de commande manuel, disposé au voisinage de cet organe de commande manuel et susceptible d'adopter au moins deux états lumineux, cet organe de diffusion de lumière associé à l'organe de commande manuel étant destiné à changer d'état au moins à la suite de l'actionnement de l'organe de commande manuel ;
- l'ensemble comprend deux organes de diffusion de lumière associés à l'organe de commande manuel, les différentes combinaisons possibles des états lumineux des organes de diffusion de lumière codifiant visuellement différentes configurations de fonctionnement de l'unité fixe ;
- l'unité d'échange de données comprend :
   deux contacteurs électriques commandés par l'organe portatif, dits contacteurs d'accessoires et de marche, destinés à activer respectivement un état de mise sous tension d'accessoires du véhicule et un état de marche du véhicule, et
   un circuit imprimé portant les contacteurs d'accessoires, de marche et de démarrage ;
- l'ensemble comprend au moins un organe de diffusion de lumière associé au tunnel, disposé au voisinage de l'extrémité d'accès de ce tunnel et susceptible d'adopter au moins deux états lumineux, cet organe de diffusion de lumière associé au tunnel étant destiné à changer d'état au moins à la suite de l'actionnement du contacteur d'accessoires ou du contacteur de marche ;
- l'organe de diffusion de lumière associé au tunnel délimite l'extrémité d'accès à ce tunnel ;
- les organes de diffusion de lumière associés au tunnel et à l'organe de commande manuel sont portés par la face d'accès de l'unité fixe, les différentes combinaisons possibles des états lumineux des organes de diffusion de lumière associés au tunnel et à l'organe de commande manuel codifiant visuellement différentes configurations de fonctionnement de l'unité fixe ;
- l'organe de commande manuel est un bouton-poussoir déplaçable entre une position de repos, vers laquelle il est rappelé élastiquement, et une position d'actionnement du contacteur de démarrage ;
- l'unité fixe comprend un support délimitant au moins partiellement le tunnel de logement de l'organe portatif, la face d'accès délimitant une paroi solidaire du support ;
- le support porte le circuit imprimé.

L'invention sera mieux comprise à la lecture de la description qui va suivre, donnée uniquement à titre d'exemple et faite en se référant aux dessins dans lesquels :
- la figure 1 est une vue en perspective de l'ensemble pour l'échange de données selon l'invention, un boîtier de protection de l'unité fixe ayant été retiré ;
- la figure 2 est une vue en perspective éclatée de l'ensemble pour l'échange de données représenté sur la figure 1 ;
- la figure 3 est une vue de détail, en perspective, de l'organe de commande manuel du contacteur de démarrage ;
- la figure 4 est une vue en perspective d'organes internes de l'ensemble pour l'échange de données représenté sur la figure 1, le point de vue de cette figure 4 étant opposé à celui de la figure 1.

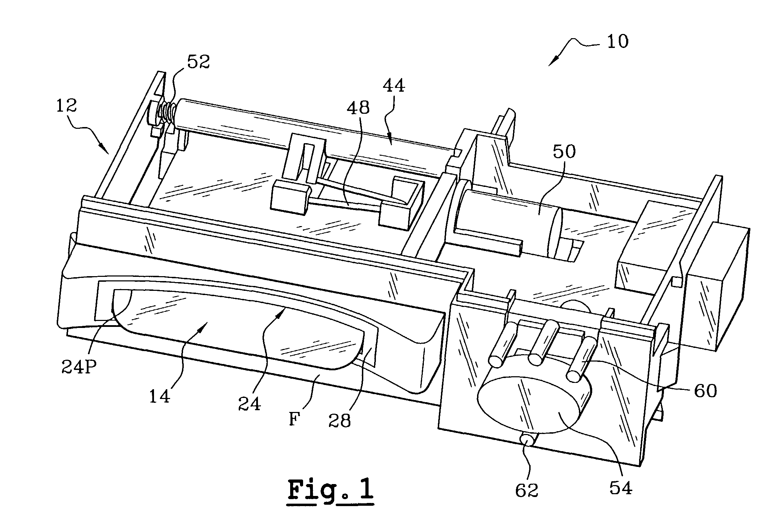

On a représenté sur les figures 1, 2 et 4 un ensemble pour l'échange de données selon l'invention, désigné par la référence générale 10.

Cet ensemble comprend une unité fixe 12 d'échange de données agencée dans un véhicule automobile, par exemple dans une planche de bord ou une console de l'habitacle de ce véhicule.

L'ensemble 10 comprend également un organe portatif 14 ou badge, de forme générale prismatique mince, destiné à être logé dans l'unité fixe 12.

L'unité fixe 12 assure une fonction d'antivol par traitement de données dont certaines, contenues dans l'organe portatif 14, sont représentatives d'au moins un utilisateur autorisé du véhicule. Les données représentatives de l'utilisateur sont stockées dans l'organe portatif 14 et traitées par l'unité fixe 12 à l'aide de moyens classiques.

Dans ce qui suit, un élément est qualifié de proximal lorsqu'il est proche de la main de l'utilisateur introduisant l'organe portatif dans l'unité fixe. Dans le cas contraire, l'élément est qualifié de distal. Par ailleurs, la direction générale de déplacement de l'organe portatif dans l'unité fixe est qualifiée de longitudinale.

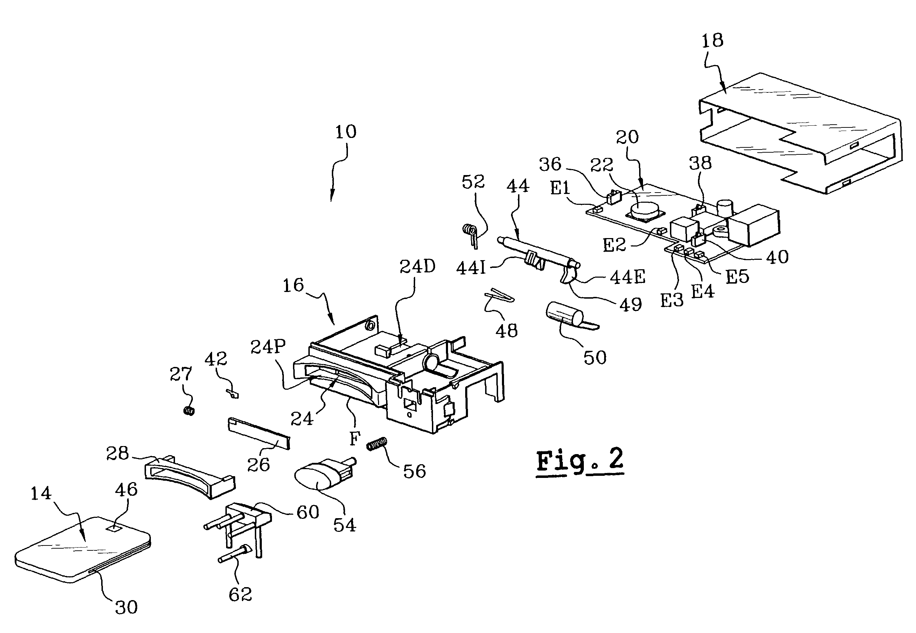

L'unité fixe 12 a une forme générale parallélépipédique. En se référant plus particulièrement à la figure 2, on voit que l'unité fixe 12 comprend un support 16 logé dans un boîtier 18. Un circuit imprimé 20, portant plusieurs composants classiques, est fixé sur le support 16, à l'intérieur du boîtier 18. Parmi ces composants classiques, on reconnaît notamment des moyens d'échange de données à transpondeur comprenant une bobine d'induction 22 destinée à interagir de façon électromagnétique avec des moyens complémentaires agencés dans l'organe portatif.

L'unité fixe est munie d'un tunnel 24 de logement de l'organe portatif 14 ayant une forme générale complémentaire de celle de l'organe portatif 14. Le tunnel 24 comprend des parties proximale 24P et distale 24D séparées par un volet mobile 26. Ce dernier est rappelé élastiquement vers une position d'obturation de la partie distale 24D du tunnel par un ressort à effet angulaire 27 illustré sur la figure 2. Le volet 26 est déplacé vers une position ouverte d'accès à la partie distale 24D du tunnel, à l'encontre de la force élastique de rappel du ressort 27, par coopération avec l'extrémité distale de l'organe portatif 14 introduit dans le tunnel.

Chaque partie 24P, 24D du tunnel comprend une extrémité opposée au volet 26 qui débouche vers l'extérieur de l'unité fixe 12. On notera que l'unité fixe 12 est habituellement agencée dans la planche de bord ou la console de l'habitacle de façon à masquer à l'égard de l'utilisateur l'extrémité débouchante de la partie distale 24D du tunnel. L'extrémité débouchante de la partie proximale 24D du tunnel forme l'extrémité d'accès au tunnel par laquelle est introduit l'organe portatif 14.

On notera donc que l'extrémité d'accès du tunnel 24 débouche dans une face transversale proximale F de l'unité fixe 12. De préférence, cette face d'accès F délimite une paroi solidaire du support 16.

Dans l'exemple illustré, la partie proximale 24P du tunnel et son extrémité d'accès sont délimitées par un organe translucide 28 de diffusion de lumière, illustré notamment sur les figures 1 et 2. La partie distale 24D du tunnel est délimitée au moins partiellement par le support 16.

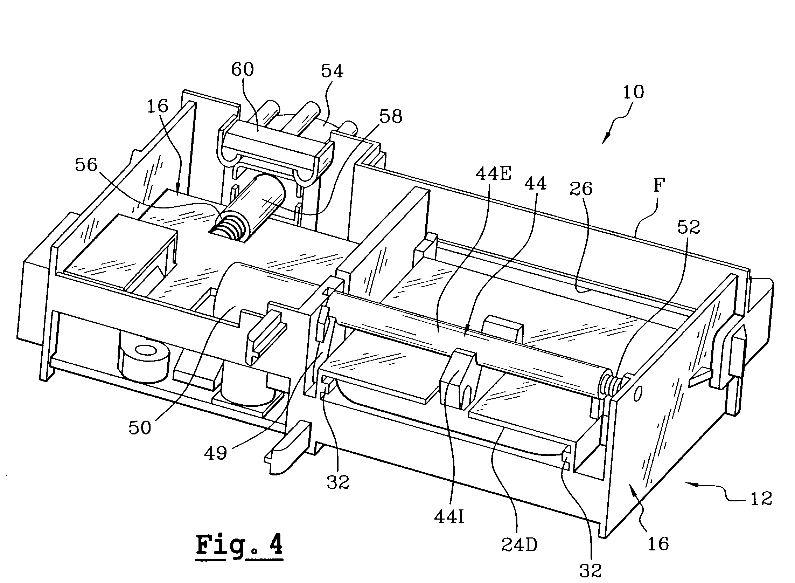

En se référant notamment aux figures 2 et 4, on voit que des rainures de guidage 30 sont ménagées sur des petites faces longitudinales de l'organe portatif 14. Ces rainures 30 sont destinées à coopérer par emboîtement avec des nervures complémentaires de guidage 32 ménagées sur des petites parois longitudinales correspondantes délimitant le tunnel 24.

L'extrémité proximale de l'organe portatif 14, destinée à saisir cet organe 14, est accessible en permanence depuis l'extérieur du tunnel 24, quelle que soit sa position dans le tunnel.

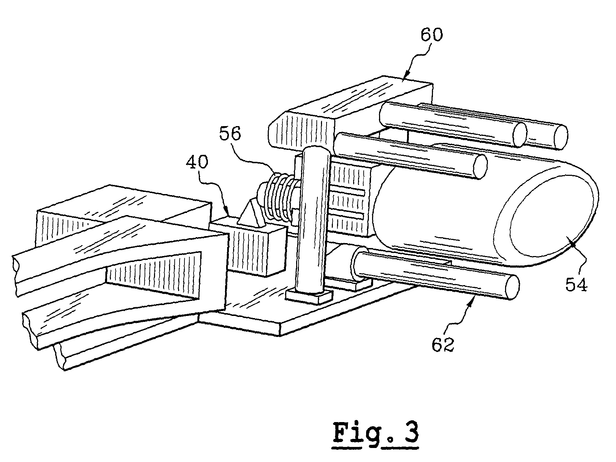

En se référant aux figures 2 et 3, on voit que le circuit imprimé 20 porte trois contacteurs électriques 36 à 40, de type classique à levier, disposés à l'extérieur du tunnel 24.

Un premier contacteur électrique 36 est destiné à activer un état de mise sous tension d'accessoires du véhicule. Le deuxième contacteur électrique 38 est destiné à activer un état de marche du véhicule. Le troisième contacteur électrique 40 est destiné à commander le démarrage ou l'arrêt du moteur du véhicule. Les trois contacteurs électriques seront appelés par la suite contacteurs d'accessoires 36, de marche 38 et de démarrage 40.

Les contacteurs électriques d'accessoires 36 et de marche 38 sont destinés à être actionnés par l'organe portatif 14 par l'intermédiaire de moyens qui seront décrits ci-dessous.

En se référant notamment à la figure 2, on voit que le contacteur d'accessoires 36 est actionné par l'intermédiaire d'un doigt de commande 42 faisant saillie dans le tunnel 24. Ce doigt de commande 42 est destiné à coopérer avec une rainure de guidage correspondante 30 de l'organe portatif 14. Le doigt de commande 42 forme donc un élément intermédiaire de renvoi permettant à l'organe portatif 14 se déplaçant dans le tunnel 24 d'actionner le contacteur d'accessoires 36 disposé à l'extérieur de ce tunnel 24.

L'organe portatif 14 est déplaçable longitudinalement dans le tunnel 24 depuis l'extrémité d'accès de ce tunnel vers une position stable d'actionnement du contacteur de marche 38, en passant par une position intermédiaire, généralement temporaire, d'actionnement du contacteur d'accessoires 36.

De façon classique, l'organe portatif 14 est maintenu dans sa position stable d'actionnement du contacteur de marche 38 par une bascule de blocage 44 montée rotative dans l'unité fixe 12 autour d'un axe transversal à la direction longitudinale de déplacement de l'organe portatif 14. La bascule de blocage est munie d'une partie 44E externe au tunnel 24 et d'une partie 441 interne à ce tunnel 24 destinée à coopérer avec l'organe portatif 14, plus particulièrement avec le bord d'un orifice 46 de cet organe portatif 14 (voir figure 2).

De façon classique, la bascule de blocage 44 est déplaçable entre deux positions, respectivement, de libération de l'organe portatif 14 et de coopération avec cet organe portatif 14. Dans cette dernière position, la bascule 44 bloque l'organe portatif 14 dans sa position stable par emboîtement d'un bras de la partie interne 441 de la bascule dans l'orifice 46 de cet organe portatif.

La bascule de blocage 44 est rappelée vers chacune de ces deux positions de libération et de coopération avec l'organe portatif 14 par un ressort bistable classique 48, par exemple en forme générale d'épingle, comme cela est représenté sur les figures 1 et 2. Conformément à un fonctionnement classique, la bascule de blocage 44 permet d'obtenir un effet d'avalement de l'organe portatif 14 au moment où cet organe 14 atteint sa position stable d'actionnement du contacteur de marche 38.

En se référant notamment aux figures 2 et 4, on voit que la partie externe 44E de la bascule est munie d'une came 49 d'actionnement du contacteur de marche 38.

Des moyens classiques 50 à électro-aimant forment une butée amovible d'interdiction du retour de la bascule de blocage 44 de sa position de coopération avec l'organe portatif 14 (correspondant à la position stable de l'organe portatif 14) vers sa position de libération, afin d'empêcher que l'organe portatif 14 soit inopportunément retiré de l'unité fixe 12 lorsque le véhicule est dans un état de marche. Ces moyens 50 à électro-aimant sont activés de façon connue en soi, respectivement désactivés, de préférence lors du démarrage, respectivement de l'arrêt, du moteur du véhicule.

Un ressort 52, entourant une extrémité de la bascule 44, a un effet de poussée, parallèlement à l'axe de rotation de cette bascule 44, de manière à former une entretoise élastique de positionnement axial de la bascule 44 favorisant le montage de cette dernière.

Pour plus de précisions sur les aspects classiques du fonctionnement de la bascule de blocage 44 on pourra se référer utilement aux documents FR-A-2 779 563 (FR-98 07250) et FR-A-2 786 297 (FR-98 14571).

Le contacteur de démarrage 40 est actionné par un bouton-poussoir 54, formant un organe de commande manuel, porté par la face d'accès F de l'unité fixe 12. Ce bouton-poussoir 54 est déplaçable entre une position de repos, vers laquelle il est rappelé élastiquement par un ressort 56, et une position d'actionnement du contacteur de démarrage 40.

De préférence, le ressort de rappel 56, prenant appui sur le bouton-poussoir 54 et la tranche d'une paroi du support 16, est logé dans un guide 58 représenté notamment sur la figure 4.

Deux organes de diffusion de lumière 60, 62, associés au bouton-poussoir 54, sont disposés au voisinage de ce bouton-poussoir 54. De préférence, ces organes de diffusion de lumière 60, 62 sont portés par le support 16 et agencés à travers la paroi délimitant la face d'accès F de façon à être visibles par un utilisateur. On notera qu'un premier organe de diffusion de lumière 60 comprend trois doigts diffuseurs alors que le second organe de diffusion de lumière 62 ne comprend qu'un seul doigt diffuseur.

Les organes de diffusion de lumière 60, 62, associés au bouton-poussoir 54, ainsi que l'organe de diffusion de lumière 28, associé au tunnel 24, sont en liaison optique avec des diodes électroluminescentes E1 à E5 correspondantes portées par le circuit imprimé 20.

Chaque organe de diffusion de lumière 60, 62 associé au bouton-poussoir 54 est susceptible d'adopter au moins deux états lumineux et est destiné à changer d'état au moins à la suite de l'actionnement du bouton-poussoir 54. Les deux états lumineux sont par exemple l'état éteint et l'état éclairé. Les différentes combinaisons possibles des états lumineux des organes de diffusion de lumière 60, 62, codifiant visuellement différentes configurations de fonctionnement de l'unité fixe 12, informent l'utilisateur sur l'état de fonctionnement de l'unité fixe 12.

En variante, l'unité fixe 12 pourrait ne comporter qu'un seul organe de diffusion de lumière associé au bouton-poussoir 54.

L'organe de diffusion de lumière 28, disposé au voisinage de l'extrémité d'accès au tunnel 24, est, comme chaque organe de diffusion de lumière 60, 62, susceptible d'adopter au moins deux états lumineux tels qu'un état éteint et un état éclairé. Par ailleurs l'organe de diffusion de lumière 28 associé au tunnel est destiné à changer d'état au moins à la suite de l'actionnement du contacteur d'accessoires 36 ou du contacteur de marche 38.

Les organes de diffusion de lumière 28, 60, 62 associés au tunnel 24 et au bouton-poussoir 54 étant portés par la face d'accès F de l'unité fixe 12, les différentes combinaisons possibles des états lumineux des organes de diffusion de lumière associés au bouton-poussoir 54 et au tunnel 24 codifient visuellement différentes configurations de fonctionnement de l'unité fixe 12 et informent ainsi l'utilisateur de l'état de fonctionnement de l'unité fixe 12.

Ainsi, les organes de diffusion de lumière 28, 60, 62 présentent par exemple les états suivants dans les configurations ci-dessous de fonctionnement de l'unité fixe 12:
- avant introduction de l'organe portatif 14 dans le tunnel 24 :
   organe de diffusion de lumière 28 : éclairé
   organe de diffusion de lumière 60 : éteint
   organe de diffusion de lumière 62 : éteint
- avant démarrage du moteur du véhicule :
   organe de diffusion de lumière 28 : éteint
   organe de diffusion de lumière 60 : éclairé
   organe de diffusion de lumière 62 : éteint
- moteur du véhicule en marche :
   organe de diffusion de lumière 28 : éteint
   organe de diffusion de lumière 60 : éteint
   organe de diffusion de lumière 62 : éclairé
- après arrêt du moteur par actionnement du bouton-poussoir 54 :
   organe de diffusion de lumière 28 : éclairé
   organe de diffusion de lumière 60 : éclairé
   organe de diffusion de lumière 62 : éteint

Le véhicule étant à l'arrêt, pour faire démarrer le moteur de ce véhicule, l'utilisateur procède de la façon suivante.

Tout d'abord, l'utilisateur introduit l'organe portatif 14 dans l'extrémité d'accès du tunnel 24 et pousse cet organe portatif 14 vers l'extrémité distale du tunnel 24.

L'organe portatif 14, poussé dans le tunnel 24, coopère initialement avec le doigt de commande 42, de façon à actionner le contacteur d'accessoires 36, puis poursuit sa course jusqu'à subir l'effet d'avalement et atteindre sa position stable. Dans cette dernière position, l'organe portatif 14 est en prise avec la bascule 44. La position stable de l'organe portatif 14 est définie par exemple par la coopération de butées complémentaires de fin de course ménagées sur la partie interne 441 de la bascule et le support 16 de l'unité fixe 12. A la position stable de l'organe portatif 14 correspond une position de la came 49 de la bascule dans laquelle cette came 49 actionne le contacteur de marche 38.

Pour commander le démarrage du moteur du véhicule, l'utilisateur appuie sur le bouton-poussoir 54, à l'encontre de la force élastique de rappel du ressort 56, de façon à actionner le contacteur de démarrage 40. Ceci a pour effet de faire démarrer le moteur et d'activer les moyens 50 à électroaimant qui interdisent le retour de la bascule de blocage 44 vers sa position de libération de l'organe portatif 14.

Après démarrage du moteur, l'utilisateur relâche le bouton-poussoir 54 qui est automatiquement rappelé par le ressort 54 vers sa position de repos. En cas d'échec du démarrage du moteur, l'utilisateur ré-appuie sur le bouton-poussoir 54 autant de fois que cela est nécessaire pour obtenir le démarrage du véhicule.

Lorsque l'utilisateur souhaite arrêter le moteur du véhicule, il appuie à nouveau sur le bouton-poussoir 54, comme pour effectuer l'étape de démarrage décrite ci-dessus, de façon à actionner de nouveau le contacteur 40. Ceci à pour effet d'arrêter le moteur et de désactiver les moyens 50 à électroaimant. L'utilisateur relâche ensuite le bouton-poussoir 54, qui est rappelé vers sa position de repos, et retire le cas échéant l'organe portatif 14 du tunnel 24 en le saisissant par son extrémité proximale faisant saillie à l'extérieur de ce tunnel.

Parmi les avantages de l'invention, on notera notamment que l'agencement, d'une part, du bouton-poussoir 54 sur la face d'accès F de l'unité fixe et, d'autre part, des trois contacteurs d'accessoires, de marche et de démarrage sur un circuit imprimé commun, optimise l'ergonomie et simplifie la structure des moyens mis en oeuvre pour identifier l'utilisateur et effectuer le démarrage ou l'arrêt du moteur du véhicule.

L'optimisation de l'ergonomie de l'ensemble selon l'invention résulte également des différentes combinaisons possibles des états lumineux des organes de diffusion de lumière associés au bouton-poussoir et au tunnel codifiant visuellement différentes configurations de fonctionnement de l'unité fixe. Grâce à cette codification, l'utilisateur est clairement informé de l'état de fonctionnement de l'unité fixe.

## Revendications

1. Ensemble pour véhicule automobile destiné à échanger des données dont certaines sont représentatives d'au moins un utilisateur autorisé du véhicule, du type comprenant un organe portatif (14), formant un support pour les données représentatives d'au moins un utilisateur autorisé, et une unité fixe (12) d'échange de données agencée dans le véhicule, destinée à assurer une fonction d'antivol par traitement de données, cette unité fixe (12) comprenant un tunnel (24) de logement de l'organe portatif (14) muni d'une extrémité d'accès débouchant dans une face de l'unité fixe, dite face d'accès (F), **caractérisé en ce qu'**il comprend au moins un organe (60, 62) de diffusion de lumière associé à un organe de commande manuel (54) porté par la face d'accès de l'unité fixe, disposé au voisinage de cet organe de commande manuel (54) et susceptible d'adopter au moins deux états lumineux, cet organe de diffusion de lumière (60, 62) associé à l'organe de commande manuel (54) étant destiné à changer d'état au moins à la suite de l'actionnement de l'organe de commande manuel (54).

2. Ensemble selon la revendication 1, **caractérisé en ce qu'**il comprend deux organes de diffusion de lumière (60, 62) associés à l'organe de commande manuel (54), les différentes combinaisons possibles des états lumineux des organes de diffusion de lumière (60, 62) codifiant visuellement différentes configurations de fonctionnement de l'unité fixe (12).

3. Ensemble selon la revendication 1 ou 2, **caractérisé en ce que** l'unité fixe d'échange de données (12) comprend un contacteur électrique (40) d'activation d'un état de démarrage ou d'arrêt d'un moteur du véhicule, dit contacteur de démarrage, actionné par ledit organe de commande manuel (54) porté par la face d'accès de l'unité fixe.

4. Ensemble selon l'une quelconque des revendications 1 à 3, **caractérisé en ce que** l'unité d'échange de données (12) comprend :
- deux contacteurs électriques (36, 38) commandés par l'organe portatif (14), dits contacteurs d'accessoires et de marche, destinés à activer respectivement un état de mise sous tension d'accessoires du véhicule et un état de marche du véhicule, et
- un circuit imprimé (20) portant les contacteurs d'accessoires (36), de marche (38) et de démarrage (40).

5. Ensemble selon la revendication 4, **caractérisé en ce qu'**il comprend au moins un organe de diffusion de lumière (28) associé au tunnel (24), disposé au voisinage de l'extrémité d'accès de ce tunnel (24) et susceptible d'adopter au moins deux états lumineux, cet organe de diffusion de lumière (28) associé au tunnel (24) étant destiné à changer d'état au moins à la suite de l'actionnement du contacteur d'accessoires (36) ou du contacteur de marche.

6. Ensemble selon la revendication 5, **caractérisé en ce que** l'organe de diffusion de lumière (28) associé au tunnel (24) délimite l'extrémité d'accès à ce tunnel.

7. Ensemble selon les revendications 1 et 5 prise ensemble, **caractérisé en ce que** les organes de diffusion de lumière (28, 60, 62) associés au tunnel (24) et à l'organe de commande manuel (54) sont portés par la face d'accès (F) de l'unité fixe, les différentes combinaisons possibles des états lumineux des organes de diffusion de lumière (28, 60, 62) associés au tunnel (24) et à l'organe de commande manuel (54) codifiant visuellement différentes configurations de fonctionnement de l'unité fixe (12).

8. Ensemble selon l'une quelconque des revendications 3 à 8, **caractérisé en ce que** l'organe de commande manuel (54) est un bouton-poussoir déplaçable entre une position de repos, vers laquelle il est rappelé élastiquement, et une position d'actionnement du contacteur de démarrage (40).

9. Ensemble selon l'une quelconque des revendications précédentes, **caractérisé en ce que** l'unité fixe (12) comprend un support (16) délimitant au moins partiellement le tunnel (24) de logement de l'organe portatif (10), la face d'accès (F) délimitant une paroi solidaire du support (16).

10. Ensemble selon les revendications 4 et 9 prises ensemble, **caractérisé en ce que** le support (16) porte le circuit imprimé (20).
